(19) **Europäisches Patentamt / European Patent Office / Office européen des brevets**

(11) **EP 1 085 341 B1**

(12) **FASCICULE DE BREVET EUROPEEN**

(45) Date de publication et mention
de la délivrance du brevet:
**18.07.2007 Bulletin 2007/29**

(51) Int Cl.:
*G01S 1/04* (2006.01) *H04B 1/707* (2006.01)

(21) Numéro de dépôt: **00402418.8**

(22) Date de dépôt: **01.09.2000**

(54) **Procédé de traitement de signaux de navigation à trajets multiples dans un récepteur présentant une pluralité d'antennes**

Bearbeitungsverfahren von Mehrweg-Navigationssignalen in einem Empfänger mit mehreren Antennen

Method of treating navigation signals with multipath in a receiver with a plurality of antennas

(84) Etats contractants désignés:
**DE ES GB IT**

(30) Priorité: **17.09.1999 FR 9911662**

(43) Date de publication de la demande:
**21.03.2001 Bulletin 2001/12**

(73) Titulaire: **AGENCE SPATIALE EUROPEENNE
F-75738 Paris Cedex 15 (FR)**

(72) Inventeur: **Selva Vera, Jesus
82205 Gilching (DE)**

(74) Mandataire: **Jacquard, Philippe Jean-Luc et al
Cabinet ORES
36, rue de St Pétersbourg
75008 Paris (FR)**

(56) Documents cités:
**WO-A-97/40398** **WO-A-98/05128**

• **MOELKER D.-J.: 'Multiple Antennas for Advanced GNSS Multipath Mitigation and Multipath Direction Finding' ION-GPS 17 Septembre 1997, KANSAS CITY, MISSOURI, pages 541 - 550**
• **VAN NEE R.D.J. ET AL: 'The multipath estimating delay lock loop: approaching theoretical accuracy limits' POSITION LOCATION AND NAVIGATION SYMPOSIUM 11 Avril 1994, NEW YORK, NY, USA, IEEE, pages 246 - 251, XP010117738**

**EP 1 085 341 B1**

**Description**

La présente invention a pour objet un procédé de traitement de signaux de navigation à trajets multiples, adaptée à un récepteur présentant une pluralité d'antennes de réception.

Un récepteur de navigation du type à accès multiple par répartition de code à séquence directe DS-CDAA (Direct-Sequence-Code-Division Multiple-Access), et estimation de la pseudoportée (« pseudorange »), les réflexions qui introduisent un retard inférieur à un bit d'une séquence de bruit pseudo-aléatoire ("chip") sont susceptibles d'introduire une erreur temporelle importante. Dans le cas envisagé ici d'un récepteur présentant une pluralité d'antennes de réception, l'atténuation des effets de ces trajets multiples dépend du nombre d'antennes du récepteur puisque chaque antenne génère une combinaison linéaire entre le signal direct et les signaux correspondant à des trajets multiples, et cette information peut être utilisée par un algorithme d'atténuation

D'une manière conventionnelle, on désignera par canal le signal provenant d'une antenne, et un récepteur sera appelé mono-canal ou multi-canaux selon qu'il présente une ou plusieurs antennes.

D'un point de vue théorique, le principe de la probabilité maximale permet d'estimer le temps, et en particulier les boucles numériques asservies sur le retard DDLL ("Digigal Delay Lock Loop") constituent une approximation de ce principe pour un signal et un canal en bruit blanc. La mise en oeuvre du principe de la probabilité maximale conduit, dans le cas des réflexions précitées, à une équation non linéaire et le traitement des signaux en est compliqué d'autant. Les boucles de verrouillage sur le retard pour l'estimation de trajets multiples MEDLL (Multipath Estimating Delay Lock Loop") en sont un bon exemple : elles nécessitent un nombre de corrélateurs au moins deux fois plus élevé que les boucles DDLL précitées, et la résolution des équations non linéaires demande un temps nettement plus élevé que la corrélation avance/retard d'une boucle DDLL.

La technique MEDLL est décrite en particulier dans l'article de Bryan TOWNSEND et collaborateurs intitulé "L1 Carrier Phase Multipath Error Reduction Using MEDLL Technology" paru en 1995 dans les "Proceedings of the Institute of Navigation GPS" pages 1539-1533, ainsi que dans l'article de Richard Van Nee et Collaborateurs, intitulé "The Multipath Estimating Delay Lock Loop : Approaching Theoretical Accuracy Limits" paru en 1994 dans la revue IEEE, pages 246-251.

Une technique d'atténuation des effets des trajets multiples selon la technique MEDLL, est également décrite dans l'Article de G. El Sayed et collaborateurs intitulé "Design of GPS Receiver Code and Carrier Tracking Loops for Multipath Mitigation" parue en 1998 dans Proceedings of 11th International Technical Meeting of the Institute of Navigation.- Nashville pages 1041 à 1052. Cette technique n'est appliquée qu'à un seul signal et ne convient donc que pour un récepteur mono-canal.

D'une manière générale, une boucle DDLL effectue une corrélation du signal d'entrée avec une réplique générée localement. La boucle choisit alors parmi toutes les corrélations possibles, à raison d'une pour chaque retard, celle qui est la plus proche du signal d'entrée. La distance entre deux corrélations est, de manière classique, mesurée à l'aide d'un vecteur, ce qui conduit à résoudre un problème linéaire de minimisation.

L'article de Dignus-Jan MOELKER "Multiple Antennas for Advanced GNSS Multipath Mitigation and Multipath Direction Finding" concerne une recherche mono ou bi-directionnelle sur les angles d'arrivée possible, selon deux algorithmes que impliquent l'un et l'autre une connaissance de la géométrie du réseau d'antennes et sa calibration.

La présente invention propose d'arriver à une formulation similaire à celle des techniques décrites par TOWNSEND et EL SAYED dans le cas d'un récepteur multicanaux, sans les inconvénients de la technique décrite par MOELKER.

L'invention concerne ainsi un procédé de traitement de signaux de navigation d'un système de navigation par satellite à l'aide d'un récepteur tel que <u>défini dans la revendication 1.</u>

L'invention repose sur l'idée que les signaux d'entrée des différents canaux couvrent le même sous-espace vectoriel que les signaux directs et les signaux issus de réflexions.

Il est dès lors possible d'estimer ce sous-espace et ensuite de se servir de la distance entre le sous-espace et les corrélations locales pour formuler le problème de minimisation.

Le procédé est alors caractérisé en ce qu'il comporte

a) un pré-traitement de chaque signal d'antenne de manière à le filtrer par un filtre adapté à la forme des signaux de navigation dudit système de navigation et à son code d'étalement de spectre, et à réaliser une moyenne sur les pics des signaux filtrés,

b) une décomposition en valeurs singulières pour réaliser une estimation d'un sous-espace vectoriel S de signal à partir des signaux filtrés et moyennés représentant des pics de corrélation,

c) une dite recherche mono-dimensionnelle des retards des signaux correspondant à des trajets directs et à des trajets réfléchis, qui peut s'effectuer en recherchant les retards correspondant à des minima de la distance entre des vecteurs de mode générés localement et correspondant à des signaux de référence dont les retards sont connus et les vecteurs du sous-espace S.

Ladite décomposition en valeurs singulières s'effectue de préférence pour des échantillons situés autour d'une crête de corrélation et dans lesquels une majeure partie de l'énergie du signal se trouve concentrée. Elle peut mettre en oeuvre une détection de discontinuité dans les valeurs singulières pour estimer le rang p du sous-espace S du signal.

Le procédé peut être caractérisé en ce que ladite recherche mono-dimensionnelle s'effectue dans une fenêtre temporelle de retard estimé dans laquelle des signaux correspondant à un trajet direct et des signaux correspondant à des trajets réfléchis sont susceptibles de se trouver.

Ladite recherche mono-dimensionnelle peut présenter:

$c_1$) - un calcul dans ladite fenêtre temporelle de retard de l'inverse de la distance entre les vecteurs du sous-espace S et les vecteurs de mode générés localement ;

$c_2$) une estimation des retards des signaux correspondant à un trajet direct et des signaux correspondant à des trajets réfléchis en choisissant les retards correspondant aux vecteurs de mode pour lesquels les valeurs desdits inverses de la distance sont maximales.

L'invention sera mieux comprise à la lecture de la description qui va suivre,donnée à titre d'exemple, en liaison avec les dessins dans lesquels :

- la figure 1 illustre le prétraitement,
- la figure 2 illustre la décomposition en valeurs singulières appliquée après pré-traitement dans un récepteur multi-canaux REC,
- la figure 3 illustre la recherche mono-dimensionnelle,
- la figure 4 illustre un mode préféré de pré-traitement,
- la figure 5 représente la sortie du filtre adapté Fi pour le ième canal, et
- la figure 6 illustre la génération de mode.

La technique évoquée plus haut, qui met en oeuvre un estimateur de probabilité maximale, réalise tout d'abord un filtrage du signal d'entrée à l'aide d'un filtre adapté au code et compare ensuite les corrélations obtenues avec des répliques locales en utilisant une équation non linéaire. Les inconnues de cette équation sont les amplitudes complexes des signaux et les retards, ce qui fait qu'une mise en oeuvre pratique telle que le MEDLL peut prendre plusieurs minutes et ne peut donc être utilisé que pour un système GPS différentiel.

Le concept proposé dans le cadre de la présente invention permet de remplacer l'étape non-linéaire de minimisation, et elle peut être appliquée à une géométrie arbitraire du réseau, pourvu que le nombre de signaux incidents sur le réseau soit inférieur au nombre d'éléments constituant le réseau.

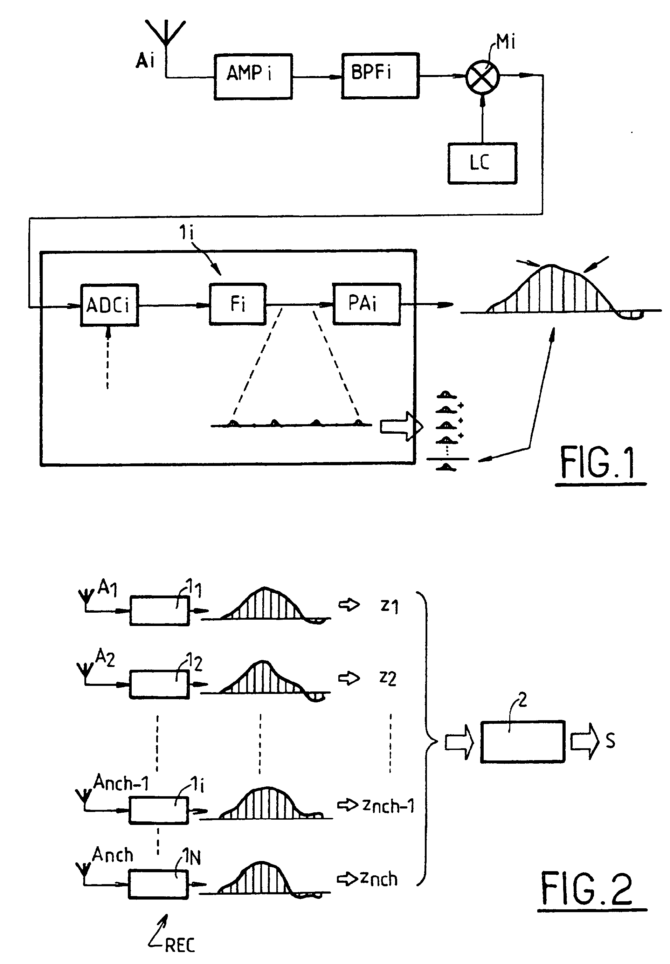

Selon la présente invention, (figure 1) les signaux provenant de N antennes A1, A2, Ai... AN sont tout d'abord, pour la ième antenne Ai, amplifiés par un amplificateur à faible bruit AMPi, filtrés par un filtre basse-bande BPFi, et transposés en bande de base dans un mélangeur Mi dont une entrée reçoit à cet effet une porteuse locale LC. Ensuite, dans un module de pré-traitement 1i, ils sont numérisés par un convertisseur analogique-numérique ADCi, puis filtrés par un filtre Fi accordé à la forme des impulsions et au code d'étalement de spectre (« spreading code »). Un tel filtre est un filtre à réponse impulsionnelle finie (FIR) dont la réponse impulsionnelle est obtenue en échantillonnant une fenêtre du signal de navigation, en utilisant plus d'un échantillon par bit ("chip") de signal pseudo-aléatoire, de manière à ce que la forme des échantilons soit reflétée dans les échantillons. Il peuvent enfin être moyennés dans une étape $PA_i$ de calcul de moyenne de valeur de crête pour fournir un signal pré-traité. Selon cette technique, les signaux de crête, corrigés de l'étalement, qui sortent du filtre Fi sont traités en prenant des échantillons situés autour de la crête de corrélation estimée et chacun de ces échantillons est moyenné pour plusieurs pics de corrélation afin d'augmenter le rapport signal/bruit.

Le signal pré-traité ne concerne qu'un petit nombre d'échantillons situés autour de la crête de corrélation, étant donné que l'énergie du signal se trouve principalement dans ces échantillons.

Ainsi qu'il sera exposé plus en détail dans la suite de la description, le procédé de l'invention met ensuite en oeuvre dans un module 2 (voir figure 2) une estimation du sous-espace S du signal par décomposition en valeurs singulières de vecteurs $Z_1$, $Z_2$, ..., $Z_{nch}$, formés à partir des échantillons des pics de corrélation de chacune des nch antennes $A_1$, $A_2$, ..., $A_{nch-1}$, $A_{nch}$.

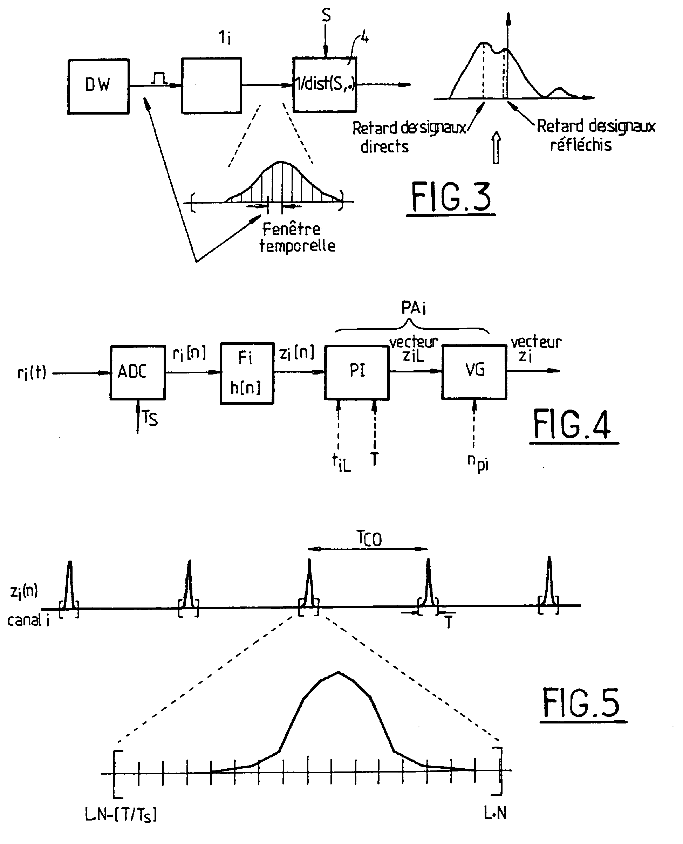

Une fois que l'estimation du sous-espace S du signal a été effectuée, le procédé met en oeuvre une recherche mono-dimensionnelle dans une fenêtre temporelle de retard dans laquelle le signal direct et les signaux issus d'une réflexion sont susceptibles de se situer (voir figure 3). Cette fenêtre temporelle peut être obtenue par une estimation grossière mettant en oeuvre une technique connue telle que la mise en oeuvre d'une boucle DDLL classique à l'aide d'un circuit DW. Le circuit 1i de pré-traitement de référence génère localement des vecteurs de mode Zi correspondant à des signaux incidents dépourvus de bruit et ayant des retards donnés connus. Les recherches des retards sont effectuées en recherchant, grâce au module 2 quels sont les vecteurs de mode les plus proches du sous-espace de signal S. Les retards ont alors pour valeur les retards correspondant à ces vecteurs de mode les plus proches. La recherche mono-dimensionnelle peut être effectuée par exemple en calculant dans la fenêtre temporelle de retard l'inverse de la distance entre le sous-espace S de signal et chacun des modes qui sont générés localement, les retards de signaux directs et des signaux ayant subi des réflexions pouvant alors être estimés dans un module 4 en recherchant les valeurs des retards pour lesquels la fonction « inverse de la distance » est maximale.

Le procédé selon l'invention conduit, pour un rapport signal/bruit d'un code C/A de - 20dB (pris avant le filtre Fi) et pour un temps d'intégration de seulement une seconde (soit environ 1000 codes), à une erreur de l'ordre d'un centième de bit d'une séquence de bruit pseudo-aléatoire (« 1/100 chip ») ce qui est très inférieur au résultat obtenu avec une boucle DDLL ($\sim$ 5,6 centièmes de bit).

On résonne sur un code C/A ayant des impulsions mises en forme ($\beta = 0 ,5$).

On utilise la notation suivante :

$n_m$ = nombre de modes
$n_{ch}$ = nombre de canaux
$n_L$ = dimension de l'espace, c'est-à-dire longueur des vecteurs
$(.)^T$ = Transposée d'une Matrice
$(.)^H$ = Conjuguée et Transposée d'une Matrice
$\lfloor a \rfloor$ = Plus grand entier inférieur ou égal à $\underline{a}$
$a \bmod b$ = Reste de la division de a par b
$\langle V_1, V_2, ... \rangle$ = espace $V_1, V_2, ...$
$[V_1, V_2,...]$ = Matrice formée par les vecteurs colonnes $V_1, V_2, ...$
rank [.] = Rang d'une Matrice ou d'un sous-espace
diag(.) = Diagonale d'une Matrice
min (.,.) = Minimum
tr(.) = sommes des éléments diagonaux d'une Matrice

Le modèle d'un signal passe-bande pour le canal de réception i est :

$$r_{bpi}(t) \equiv \sum_{k=1}^{n_m} \alpha_{ik} s(t-\tau_k)\cos(\omega t + \theta_{ik}) + n_{wbp}(t), \quad i = 1,...,n_{ch} \qquad (1)$$

s(t) = Code C/A avec des impulsions mises en forme
$n_{wbp}(t)$ = Bruit blanc passe-bande
$\alpha ik$ = amplitudes réelles
$\theta ik$ = Phases multi-trajets

L'équivalent passe-bas de rbpi(t) est :

$$r_i(t) \equiv \frac{1}{2}\sum_{k=1}^{n_m} \alpha_{ik} e^{j\theta_{ik}} s(t-\tau_\kappa) + n_w(t) = \sum_{k=1}^{n_m} a_{ik} s(t-\tau_\kappa) + n_w(t), \quad i = 1,...,n_{ch}$$

$$(2)$$

avec :

$n_w(t)$ = Bruit blanc

$a_{ik} \equiv \frac{1}{2}\alpha_{ik} e^{j\theta_{ik}}$ = Coefficients complexes (3) multi-trajets

$\tau_k$ = retards multi-trajets

$n_m$ = nombre de signaux multi-trajets

Après échantillonnage pendant une durée Ts, N échantillons sont disponibles pour chaque canal. On a alors :

$$r_i[n] \equiv \sum_{k=1}^{n_m} a_{ik} s[n, \tau_x] + n_w[n], \quad i = 1, \ldots, n_{ch}. \tag{4}$$

avec

$s[n,\tau]$ = s $(nT_s - \tau)$ = signal de référence (5) échantillonné avec un retard $\tau$
$n_w[n]$ = Bruit échantillonné

L'estimation des valeurs de $a_{ik}$ et de $\tau_k$, lorsque N échantillons sont disponibles par canal, peut être réalisée à l'aide de la fonction de probabilité maximale, à savoir :

$$L \equiv - \sum_{i=1}^{n_{ch}} \sum_{m=0}^{N-1} \left| r_i[n-(N-1)+m] - \sum_{k=1}^{n_m} a_{ik} s[m, \tau_k] \right|^2 \tag{6}$$

Les estimations d'amplitude $a_{i_1}k_1$ et de retard $\tau R_1$ sont conformes aux équations suivantes :

$$R_{rs,i_1}[n, \tau_{k_1}] - \sum_{k=1}^{n_m} a_{i_1 k} R_s(\tau_k, \tau_{k_1}) = 0, \quad i_1 = 1, \ldots, n_{ch}, \quad k_1 = 1, \ldots, n_m, \tag{7}$$

et

$$[\hat{\tau}_{k_1}, \ldots, \hat{\tau}_{n_m}] = \arg\min_{[\tau_{k_1}, \ldots, \tau_{n_m}]} \left\{ \sum_{i=1}^{n_{ch}} \mathrm{Re} \left\{ a_{ik_1}^* \left( R_{rs,i}[n, \tau_{k_1}] - \sum_{k=1, k \neq k_1}^{n_m} a_{ik} R_s(\tau_k, \tau_{k_1}) \right) \right\} \right\} \tag{8}$$

équation dans laquelle $R_{rs,i}(n,\tau)$ et $R_s(\tau_1,\tau_2)$ sont données par les formules de corrélation suivantes :

$$R_{rs,i}[n,\tau] = \sum_{m=0}^{N-1} r_i[n-(N-1)+m] s[m,\tau] \tag{9}$$

(corrélation de référence de canal)

$$R_s(\tau_1, \tau_2) \cong R_s(\tau_2 - \tau_1) = \sum_{m=0}^{N-1} s[m, \tau_1] s[m, \tau_2] \qquad (10)$$

(auto-corrélation de référence).

L'estimation équivaut à faire correspondre $n_m$ auto-corrélations de référence à ns corrélations de canal, avec des amplitudes complexes et des retards différents. Les inconnues sont seulement les retards, car les amplitudes peuvent être obtenues à partir de (7) et remplacées dans (8). Ceci conduit à des équations non linéaires.

Au cas où $n_{ch} = 1$, les équations (7) et (8) sont les équations MEDLL [voir l'ouvrage de Richard Van Nee « Multi-transmitter Interference in Special Spectrum Communication and Navigation System » Delft University Press - Netherlands (1995)].

Selon l'invention, au lieu de réaliser une estimation faisant correspondre les corrélations de canaux, avec des corrélations de référence, ce qui conduit à des équations non linéaires, on réalise, à partir des mêmes corrélations, une estimation du sous-espace. En conséquence, dans les deux cas, les signaux des différents canaux doivent subir un pré-traitement pour obtenir les corrélations de canaux.

En particulier, ce sont les quelques échantillons situés au voisinage des pics de corrélation qui présentent de l'intérêt (voir le circuit de la figure 4).

Dans ce circuit, le signal $r_i(t)$ du ième canal est échantillonné à des intervalles Ts dans un module d'échantillonnage ADCi et passe à travers le filtre Fi correspondant au signal de référence (une période de code de s(-τ)). La sortie $Z_i[n]$ du filtre est donnée par :

$$z_i[n] = r_i * h[n] \qquad (11)$$

ou h[n] désigne la réponse du filtre adapté.

Les signaux Zi[n] de sortie du filtre adapté Fi sont illustrés à la figure 5. Etant donné que le niveau des signaux n'est suffisamment élevé que pour les échantillons situés au voisinage des pics de corrélation, on ne conserve que ceux-ci. On peut par exemple, comme indiqué ci-dessus, déterminer de manière approximative l'emplacement des pics et choisir une référence de temps $t_{iL}$ de sorte que :

$t_{iL} = NT_S - T/2$ (L = 1,...,$n_{pi}$, $n_{pi}$ désignant le nombre de pics de corrélations disponibles pour le ième canal).
T désigne l'intervalle de temps autour des pics de corrélation. Le circuit ne conserve que les échantillons situés dans la fenêtre :

$$[NT_s - T, NT_s] \qquad (12)$$

La durée de l'intervalle T étant connue, les échantillons générés par le module PI et situés dans la fenêtre $[t_{iL} - T/2, t_{iL} + T/2]$ constituent un vecteur $Z_{iL}$ :

$$z_{iL} = \left[ z_i[L \cdot N - \lfloor T/T_s \rfloor], z_i[L \cdot N - \lfloor T/T_s \rfloor + 1], \cdots, z_i[L \cdot N] \right]^T \qquad (13)$$

Il s'agit des échantillons autour du Lème pic de corrélation.

Le rapport signal sur bruit de ces échantillons pouvant s'avérer insuffisant, il est avantageux dans ce cas de réaliser dans un module VG une moyenne sur $n_{pi}$ pics de corrélation. On obtient ainsi ce que l'on appelle les vecteurs de canaux Zi (avec i compris entre 1 et $n_{ch}$), également dénommés Ci (figure 2). On a :

$$z_i = \frac{1}{n_{pi}} \sum_{L=1}^{n_{pi}} z_{iL}$$

(14)

Le vecteur de canal équivaut à la corrélation de référence de canal de l'estimateur de probabilité maximale selon l'équation (9) étant donné que :

$$(r_i * h)[n] = \sum_{k=-\infty}^{+\infty} h[k]\, r_i[n-k] = \sum_{k=0}^{N-1} s[N-k,0]\, r_i[n-k]$$

(15)

A l'instant n = N-p avec p<<N, la sortie du filtre adapté a pour valeur :

$$(r_i * h)[N-p] = \sum_{k=0}^{N-1} s[N-k,0]\, r_i[N-p-k] = \sum_{k=-p}^{N-1-p} s[N-k-p,0]\, r_i[N-k] \cong R_{rs}[N,pT_s]$$

(16)

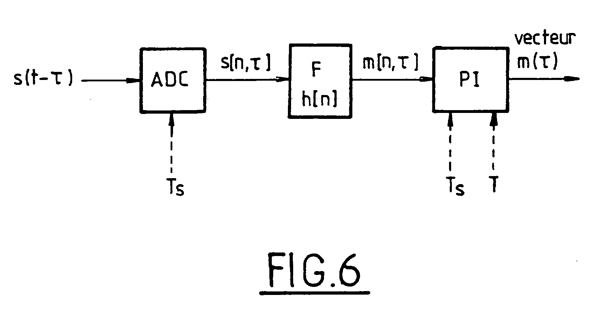

Cette estimation est également fonction de l'auto-corrélation de référence qui peut également être obtenue à l'aide du circuit de la figure 4 (sans le module VG) en utilisant s(t-τ) en tant que signal d'entrée (voir figure 6) et en supprimant l'opération de moyenne, puisqu'il n'y a pas de bruit. On appelle modes (ou vecteurs de mode) les sorties ainsi obtenues :

$$m[n,\tau] = (s[.,\tau] * h)[n]$$

(17)

(corrélation de référence).

$$m(\tau) = \left[\, m\big[\lfloor -T/2 \rfloor + 1, \tau\big], m\big[\lfloor -T/2 \rfloor + 2, \tau\big] \cdots m\big[\lfloor T/2 \rfloor, \tau\big] \,\right]^T \quad (\text{modes})$$

(18)

Les modes m(τ) équivalent à l'auto-corrélation de référence (probabilité maximale) selon l'équation (10) car:

$$(s[.,\tau] * h)[n] = \sum_{k=-\infty}^{+\infty} h[k]\, s[n-k,\tau] = \sum_{k=0}^{N-1} s[N-k,0]\, s[n-k,\tau]$$

(19)

A l'instant n = N-p avec p<<N, la sortie du filtre F vaut :

$$\left(s[\cdot,\tau]*h\right)[N-p] = \sum_{k=0}^{N-1} s[N-k,\tau]\,s[N-p-k,\tau] = \sum_{k=0}^{N-1} s[N-k,\tau]\,s[N-k,\tau+pT_s] \equiv R_s(pT_s)$$

$$(20)$$

Comme indiqué plus haut, le traitement des données pour réaliser une estimation suivant le principe de la probabilité maximale selon l'équation (8) est très compliqué. Le présent procédé permet de simplifier considérablement la solution de ce problème en utilisant un concept différent qui consiste tout d'abord à estimer le sous-espace dans lequel la majeure partie de la puissance du signal est concentrée, et à rechercher ensuite les modes (ou vecteurs de mode) les plus proches, à l'aide d'une recherche mono-dimensionnelle.

En l'absence de bruit, les vecteurs de canaux $z_1$, $z_2$,...$zn_{ch}$, sont des combinaisons linéaires des vecteurs de mode $m_1$, $m_2$, ... $mn_m$.

Les vecteurs de canaux et les vecteurs de mode parcourent le même sous-espace $\mathbf{S} = \mathbf{C}$, avec :

$S = <\mathbf{m}_1,\mathbf{m}_2,...\mathbf{m}n_m>$ (sous-espace des signaux)
$C = < z_1, z_2, ...zn_{ch}>$ (sous-espace des canaux)

Les vecteurs de mode étant les valeurs d'une fonction à un paramètre $m_i = \mathbf{m}(\tau_i)$, i = 1, ... $n_m$, il est possible de déterminer les vecteurs de mode en intersectant la variété $\mathbf{m}(\tau)$ avec le sous-espace des canaux.

On utilise la notation suivante :

$n_L$ = dimension de l'espace
$\mathbf{N} = S\perp = <\mathbf{n}_1, \mathbf{n}_2, ... , \mathbf{n}n_L{}_{-n_m}>$ sous espace de bruit ou sous-espace orthogonal à S.
$m(\tau)$ vecteurs de mode en fonction du paramètre $\tau$ $\mathbf{m}i = \mathbf{m}(\tau i)$ Modes, i=1,...,$n_m$.

Les vecteurs de canaux $z_1$,$z_2$, ... , $zn_{ch}$ sont des combinaisons linéaires des modes, à savoir :

$$z_i = \sum_{k=1}^{n_m} a_{ik}\, m_k \ , \ i = 1,...,n_{ch}$$

$$(21)$$

$a_i k$ = constantes.

Les vecteurs de mode peuvent être obtenus à partir des valeurs de $\tau$ pour lesquelles $m(\tau)$ est orthogonale au sous-espace N, soit :

$$n_k^H \cdot m(\tau) = 0, \quad k = 1,...,n_L - n_m.$$

$$(22)$$

En présence de bruit, la méthode ci-dessus n'est pas adaptée étant donné que les vecteurs de mode ne parcourent en fait qu'un sous-espace de l'espace des canaux. Il faut donc trouver à partir de C le sous-espace CS autour duquel la majeure partie de l'énergie est concentrée et appliquer ensuite la méthode de recherche paramétrique précédente.

Soit la matrice $\mathbf{z} = [\mathbf{z}_1, \mathbf{z}_2,..., \mathbf{z}n_{ch}]$. On recherche le rang p de la matrice Hp pour lequel la somme des carrés des éléments de $\mathbf{z}$-$H_p$ est minimale.

Cette condition peut être reformulée de la manière suivante :

$$e^2 = \mathrm{tr}\left(\left(z - H_\rho\right)^H \left(z - H_\rho\right)\right) \qquad (23)$$

Cette équation (23) représente le carré de la norme de Frobenius appliquée à la matrice **Z**-Hp.

On se reportera à l'ouvrage de Louis L. Scharf intitulé « Statistical Signal Processing, Detection, Estimation and Time Series Analysis » page 45 publié en 1991 par Addison-Wesley Publishing Company Inc.

Le problème de la minimisation de cette norme est résolu en appliquant une décomposition en valeurs singulières (équation 24) qui permet d'exprimer z sous la forme :

$$z = U\Sigma V^H \qquad (24)$$

U étant une matrice orthogonale de dimension $n_L \times n_{Ln}$, est une matrice diagonale de dimension $n_L \times n_{ch}$ et V est une matrice orthogonale de dimension $n_{ch} \times n_{ch}$. Les éléments diagonaux de la matrice , dénommés valeurs singulières sont positifs ou nuls. Ils sont classés par valeurs décroissantes.

$$\mathrm{diag}(\Sigma) = \left[ \lambda_1^2, \lambda_2^2, \ldots, \lambda_{\min(n_L, n_{ch})}^2 \right] \qquad (25)$$

La matrice Hp peut s'exprimer sous la forme :

$$H_\rho = U\Sigma_\rho V^H \qquad (26)$$

U et V étant donnés par (24).

En substituant le résultat des équations (24) et (26) dans l'équation (23)et en tenant compte du fait que $UU^H = I$ et $VV^H = I$, on a :

$$e^2 = \mathrm{tr}\left(\left(z - H_\rho\right)^H \left(z - H_\rho\right)\right) = \mathrm{tr}\left(V\left(\Sigma - \Sigma_\rho^H\right)U^H U\left(\Sigma - \Sigma_\rho\right)V^H\right)$$

$$\mathrm{tr}\left(V\left(\Sigma - \Sigma_\rho^H\right)\left(\Sigma - \Sigma_\rho\right)V^H\right) = \mathrm{tr}\left(\left(\Sigma - \Sigma_\rho^H\right)\left(\Sigma - \Sigma_\rho\right)\right) \qquad (27)$$

La matrice $H_p$ étant de rang p, l'erreur est minimale quand Σp est diagonale et annule les éléments de sa diagonale dont l'ordre est supérieur à $p_i$ à savoir :

$$\mathrm{diag}(\Sigma_\rho) = \left[ \lambda_1^2, \lambda_2^2, \ldots, \lambda_\rho^2, 0, 0 \ldots \right] \qquad (28)$$

Le rang pour lequel cela se produit peut être évalué en détectant une discontinuité dans la suite des valeurs singulières de sorte que

$\lambda_1^2, \lambda_2^2, ....,$ et $\lambda_p^2$ soient de même ordre de grandeur et que

$\lambda_{p+1}^2, \lambda_{p+2}^2, ....,$ et $\lambda_{\min(n_L, n_{ch})}^2$ leur soient très inférieurs.

Ceci ne fonctionne que si le rapport signal sur bruit est meilleur que 0dB, car :

$$\lambda_i^2 = \lambda_{si}^2 + \sigma_n^2, \quad 1 \le i \le p$$
$$\lambda_i^2 = \sigma_n^2, \qquad p+1 \le i \le \min(n_L, n_s) \qquad\qquad (29)$$

désignant les valeurs singulières du signal et la variance du bruit (voir l'ouvrage précité de Louis L. Scharf pages 499-500).

Le procédé peut donc être résumé de la manière suivante :

- Décomposer Z en valeurs singulières

$$z = U\Sigma V^H.$$

- Détecter une discontinuité dans les valeurs singulières et en déduire une valeur estimée du rang p du sous-espace.
- Le rang p est donné par z = $U\Sigma_p V^H$ avec $\Sigma_p$ ne contenant que p éléments diagonaux.

Si on écrit U = [$U_1$ $U_2$], $U_1$ contenant les p premières colonnes et $U_2$ les $n_L$-p colonnes restantes alors <U1> est le sous-espace approximé de rang p (sous-espace de signal) et <U2> est son complément orthogonal (sous-espace de bruit).

La recherche paramétrique de mode est réalisée à l'aide de l'équation (22) en calculant les valeur $\tau$ pour lesquelles :

$$m(\tau)^H U_2 = 0 \qquad\qquad (30).$$

Etant donné que la norme de l'équation 30 est faible, $\tau$ peut être estimé en recherchant les maxima de l'inverse du carré de la norme, à savoir

$$P(\tau) = \frac{1}{\left\| m(\tau)^H U_2 \right\|_i^2} \qquad (\text{spectre de retard}) \qquad (31).$$

Les valeurs singulières permettront de faire la distinction entre le sous-espace de signal et le sous-espace de bruit. Une fois le sous-espace estimé, la recherche paramétrique détecte les vecteurs de mode les plus proches.

La séparation entre les sous-espaces de signal <U1> et de bruit <U2> est détectée par une discontinuité dans la séquence des valeurs singulières. La détection de cette discontinuité peut être réalisée en commençant par la valeur singulière la plus faibles, et en comparant les incréments successifs de ces valeurs singulières avec leur incrément moyen et une discontinuité est considérée comme détectée si sa valeur relative est supérieure à un seuil donné. Ce seuil peut être choisi de manière à correspondre à une erreur temporelle dans la gamme de -25 à -20 dB, ce qui est une valeur typique pour un code C/A. Un tel critère est particulièrement utile dans le cas où, pour une mode donné, le nombre des canaux est supérieur au nombre des échantillons. En pratique, on notera qu'il est préférable de surestimer (plutôt que de sous-estimer) le nombre des valeurs singulières.

Une fois le sous-espace déterminé, la recherche mono-dimensionnelle est conduite de la manière qui a été exposée plus haut, ce qui permet de déterminer les retards recherchés pour les signaux correspondant à un trajet direct et pour ceux correspondant à des trajets ayant subi des réflexions.

**Revendications**

1. Procédé de traitement de signaux de navigation d'un système de navigation par satellite à l'aide d'un récepteur, le récepteur présentant une pluralité d'antennes générant des signaux représentant la réception de signaux correspondant à des trajets directs et à des trajets réfléchis **caractérisé en ce qu'**il met en oeuvre une recherche mono-dimensionnelle des retards des signaux correspondant à des trajets directs et à des trajets réfléchis en comparant les signaux d'un sous-espace vectoriel de signal obtenu à partir des signaux d'antenne avec des signaux de référence correspondant à des retards connus.

2. Procédé selon la revendication 1, **caractérisé en ce qu'**il comporte

   a) un pré-traitement de chaque signal d'antenne de manière à le filtrer par un filtre adapté à la forme des signaux de navigation dudit système de navigation et à son code d'étalement de spectre, et à réaliser une moyenne sur les pics des signaux filtrés,
   b) une décomposition en valeurs singulières pour réaliser une estimation du sous-espace vectoriel de signal à partir des signaux filtrés et moyennés représentant des pics de corrélation,
   c) une dite recherche mono-dimensionnelle desdits retards des signaux, correspondant à des trajets directs et à des trajets réfléchis.

3. Procédé selon la revendication 2, **caractérisé en ce que** la recherche mono-dimensionelle est effectuée en recherchant les retards correspondant à des minima de la distance entre des vecteurs de mode générés localement et correspondant auxdits signaux de référence dont les retards sont connus et ledit sous-espace vectoriel de signal.

4. Procédé selon une des revendications 2 ou 3, **caractérisé en ce que** ladite décomposition en valeurs singulières s'effectue pour des échantillons situés autour d'une crête de corrélation et autour desquels une majeure partie de l'énergie du signal se trouve concentrée.

5. Procédé selon une des revendications 2 ou 3, **caractérisé en ce que** la décomposition en valeurs singulières met en oeuvre une détection de discontinuité dans les valeurs singulières pour estimer le rang p du sous-espace S du signal.

6. Procédé selon une des revendications précédentes, **caractérisé en ce que** ladite recherche mono-dimensionnelle s'effectue dans une fenêtre temporelle de retard estimé dans laquelle des signaux correspondant à un trajet direct et des signaux correspondant à des trajets réfléchis sont susceptibles de se trouver.

7. Procédé selon la revendication 6, **caractérisé en ce que** ladite recherche mono-dimensionnelle présente :

   c1)- un calcul dans ladite fenêtre temporelle de retard de l'inverse de la distance entre les vecteurs du sous-espace vectoriel de signal et les vecteurs de mode générés localement ;
   c2) une estimation des retards des signaux correspondant à un trajet direct et des signaux correspondant à des trajets réfléchis en choisissant les retards correspondant aux vecteurs de mode pour lesquels les valeurs desdits inverses de la distance sont maximales.

**Claims**

1. Method of processing navigation signals for a satellite navigation system using a receiver, wherein the receiver comprises a plurality of antennas generating signals representative of the reception of signals corresponding to direct paths and to reflected paths, **characterized in that** it carries out a one-dimensional search for the delays of the signals corresponding to direct paths and to reflected paths by comparing the signals of a vector signal subspace obtained from antenna signals with reference signals corresponding to known delays.

2. Method according to Claim 1, **characterized in that** it comprises:

   a) a preprocessing of each antenna signal so as to filter it, by a filter matched to the waveform of the navigation signals of said navigation system and to its spectrum spreading code, and to take an average over the peaks of the filtered signals;
   b) a decomposition into singular values in order to make an estimation of a vector signal subspace from the filtered and averaged signals representative of the correlation peaks;
c) a said one-dimensional search for said delays of the signals corresponding to direct paths and to reflected paths.

3. Method according to claim 2, **characterized in that** the one-dimensional search is carried out by seeking the delays corresponding to minima in the distance between locally generated mode vectors corresponding to said reference signals, the delays of which are known, and said vector signal subspace.

4. Method according to any of claims 2 or 3, **characterized in that** said decomposition into singular values is carried out for samples located around a correlation peak and around which most of the energy of the signal is concentrated.

5. Method according to any of claims 2 or 3, **characterized in that** the decomposition into singular values employs detection of a discontinuity in the singular values in order to estimate the rank p of the subspace S of the signal.

6. Method according to any one of the preceding claims, **characterized in that** said one-dimensional search is carried out in an estimated delay timeslot in which signals corresponding to a direct path and signals corresponding to reflected paths can be found.

7. Method according to Claim 6, **characterized in that** said one-dimensional search comprises:

$c_1$) a calculation in said delay timeslot of the inverse of the distance between the vectors of the vector signal subspace and the locally generated mode vectors;
$c_2$) an estimation of the delays of the signals corresponding to a direct path and of the signals corresponding to reflected paths by choosing the delays corresponding to the mode vectors for which the values of said inverses of the distance are a maximum.

## Patentansprüche

1. Verfahren zur Verarbeitung von Navigationssignalen eines Satellitennavigationssystems mit Hilfe eines Empfängers, wobei der Empfänger eine Vielzahl von Antennen aufweist, welche Signale erzeugen, die den Empfang von Signalen darstellen, welche direkten Wegen und reflektierten Wegen entsprechen, **dadurch gekennzeichnet, dass** es eine eindimensionale Untersuchung von Verzögerungen von Signalen einsetzt, welche direkten Wegen und reflektierten Wegen entsprechen, indem die Signale eines Signaluntervektorraums, welcher ausgehend von Antennensignalen erhalten wird, mit Bezugssignalen verglichen werden, welche bekannten Verzögerungen entsprechen.

2. Verfahren nach Anspruch 1, **dadurch gekennzeichnet, dass** es umfasst

a) eine Vorverarbeitung von jedem Antennensignal auf solche Weise, dass es durch ein Filter gefiltert wird, welches an die Form der Navigationssignale des Navigationssystems und an seinen Spektralverteilungscode angepasst ist, und dass ein Mittelwert über die Spitzen der gefilterten Signale gebildet wird,
b) eine Auflösung in Einzelwerte, um ausgehend von den gefilterten Signalen und Korrelationsspitzen darstellenden Mittelwerten eine Abschätzung des Signalvektorunterraums zu bewirken,
c) die eindimensionale Untersuchung der Signalverzögerungen, welche direkten Wegen und reflektierten Wegen entsprechen.

3. Verfahren nach Anspruch 2, **dadurch gekennzeichnet, dass** die eindimensionale Untersuchung erfolgt, indem die Verzögerungen untersucht werden, welche den Minima des Abstands zwischen den lokal erzeugten Modenvektoren, welche den Bezugssignalen entsprechen, deren Verzögerungen bekannt sind, und dem Signalvektorunterraum entsprechen.

4. Verfahren nach einem der Ansprüche 2 oder 3, **dadurch gekennzeichnet, dass** die Auflösung in Einzelwerte erfolgt für Stichproben, welche sich um eine Korrelationsspitze herum befinden und um welche herum ein Hauptteil der Energie des Signals konzentriert ist.

5. Verfahren nach einem der Ansprüche 2 oder 3, **dadurch gekennzeichnet, dass** die Auflösung in Einzelwerte ein Erfassen einer Diskontinuität in den Einzelwerten einsetzt, um den Rang p des Signalunterraums S abzuschätzen.

6. Verfahren nach einem der vorhergehenden Ansprüche, **dadurch gekennzeichnet, dass** die eindimensionale Untersuchung in einem abgeschätzten Verzögerungszeitfenster erfolgt, in welchem die Signale, welche einem direkten Weg entsprechen, und die Signale, welche reflektierten Wegen entsprechen, sich befinden können.

7. Verfahren nach Anspruch 6, **dadurch gekennzeichnet, dass** die eindimensionale Untersuchung aufweist:

    c1) - eine Berechnung des Inversen des Abstands zwischen den Vektoren des Signalvektorunterraums und den lokal erzeugten Modenvektoren in dem Verzögerungszeitfenster;
    c2) - eine Abschätzung der Verzögerungen der Signale, welche einem direkten Weg entsprechen, und der Signale, welche reflektierten Wegen entsprechen, indem die Verzögerungen ausgewählt werden, welche den Modenvektoren entsprechen, für welche die Werte des Inversen des Abstands maximal sind.

FIG.1

FIG.2

**FIG.3**

Retard de signaux directs / Retard de signaux réfléchis

Fenêtre temporelle

**FIG.4**

**FIG.5**

$s(t-\tau)$ ──────→ | ADC | ── $s[n,\tau]$ → | F $h[n]$ | ── $m[n,\tau]$ → | PI | ──→ vecteur $m(\tau)$

$T_s$

$T_s$  $T$

## FIG.6

## RÉFÉRENCES CITÉES DANS LA DESCRIPTION

**Littérature non-brevet citée dans la description**

- **BRYAN TOWNSEND.** L1 Carrier Phase Multipath Error Reduction Using MEDLL Technology. *Proceedings of the Institute of Navigation GPS,* 1995, 1539-1533
- **RICHARD VAN NEE.** The Multipath Estimating Delay Lock Loop : Approaching Theoretical Accuracy Limits. *IEEE,* 1994, 246-251
- **G. EL SAYED.** Design of GPS Receiver Code and Carrier Tracking Loops for Multipath Mitigation. *Proceedings of 11th International Technical Meeting of the Institute of Navigation,* 1998, 1041-1052
- **RICHARD VAN NEE.** *Multi-transmitter Interference in Special Spectrum Communication and Navigation System,* 1995
- **LOUIS L. SCHARF.** Statistical Signal Processing, Detection, Estimation and Time Series Analysis. Addison-Wesley Publishing Company Inc, 1991, 45